# EUROPEAN PATENT APPLICATION

(11) **EP 3 842 682 A1**
(43) Date of publication of application: **30.06.2021**
(21) Application number: 18931369.5
(22) Date of filing: 30.08.2018
(51) Int. Cl.: F16M 11/12, F16M 11/14

(54) **CRADLE HEAD CONTROL METHOD AND DEVICE, CRADLE HEAD SYSTEM AND UNMANNED AERIAL VEHICLE**

(71) Applicant: SZ DJI Technology Co., Ltd., Shenzhen, Guangdong 518057 (CN)
(72) Inventor: LIU, Shuai, Shenzhen, Guangdong 518057 (CN); WANG, Yingzhi, Shenzhen, Guangdong 518057 (CN); WANG, Zhendong, Shenzhen, Guangdong 518057 (CN)
(74) Representative: Goddar, Heinz J.
(86) International application number: PCT/CN2018/103193
(87) International publication number: WO 2020/042064

(57) **Abstract**

A control method of a gimbal (10), a control device (20) of the gimbal (10), a gimbal control system (100), and an UAV (1000). The control method of the gimbal (10) is applied to the gimbal system (100). The gimbal (10) includes a rotating shaft frame (12). The control method includes (012) obtaining a current attitude of the rotating shaft frame (12); (014) obtaining a current operating mode of the gimbal (10); (015) comparing the current attitude with a threshold attitude and obtaining a comparison result of the current attitude and the threshold attitude; and (016) controlling the gimbal to rotate based on the comparison result.

## Description

### TECHNICAL FIELD

The present disclosure relates to electronic technology and, more specifically, to a gimbal control method, a gimbal control device, a gimbal system, and an unmanned aerial vehicle (UAV).

### BACKGROUND

In the field of gimbal technology, taking the handheld gimbal as an example, there are generally two operating modes, the stabilization mode and follow mode. Under the stabilization mode, when the user controls the gimbal, the gimbal in the stabilization mode may hit a mechanical limit due to the excessive movement angle and cause the gimbal to shake. Under the follow mode, due to the user's movement such as walking, arm shaking, etc., the gimbal will shake. The shaking of the gimbal will affect the working effect of the payload mounted on the gimbal, such as the camera, video camera, sensor, and fill light. For example, if the gimbal is carrying a camera, the captured image will be blurred due to the shaking of the gimbal; if the gimbal is carrying a video camera, the recorded image will shake due to the shaking of the gimbal; if the gimbal is carrying a sensor, the shaking of the gimbal will cause error in the information obtained by the sensor; if the gimbal is carrying a fill light, the field of view of the fill light will deviate from the object to be filled due to the shaking of the gimbal.

### SUMMARY

The embodiments of the present disclosure provide a gimbal control method, a gimbal control device, a gimbal system, and a UAV. The rotation of the gimbal can be controlled based on the current attitude of the pivot frame and the current operating mode of the gimbal.

The gimbal control method according to an embodiment of the present disclosure can be applied to a gimbal system. The gimbal includes a rotating shaft frame. The gimbal control method includes obtaining a current attitude of the rotating shaft frame; obtaining a current operating mode of the gimbal; comparing the current attitude with a threshold attitude and obtaining a comparison result of the current attitude and the threshold attitude; and controlling the gimbal to rotate based on the comparison result. The current operating mode of the gimbal include a stabilization mode and a follow mode. Controlling the gimbal to rotate based on the comparison result includes one or more of controlling the gimbal to rotate based on the comparison result to cause the gimbal to maintain the stabilization mode, controlling the gimbal to rotate based on the comparison result to cause the gimbal to maintain the follow mode, and controlling the gimbal to rotate to cause the gimbal to switch between the stabilization mode and the follow mode.

The gimbal control method according to an embodiment of the present disclosure can be applied to a gimbal system. The gimbal includes a rotating shaft frame, and the control device includes a processor. The processor being configured to obtain a current attitude of the rotating shaft frame; obtain a current operating mode of the gimbal; compare the current attitude with a threshold attitude and obtain a comparison result of the current attitude and the threshold attitude; and control the gimbal to rotate based on the comparison result. The current operating mode of the gimbal includes a stabilization mode and a follow mode. Controlling the gimbal to rotate based on the comparison result includes one or more of controlling the gimbal to rotate based on the comparison result to cause the gimbal to maintain the stabilization mode, controlling the gimbal to rotate based on the comparison result to cause the gimbal to maintain the follow mode, and controlling the gimbal to rotate to cause the gimbal to switch between the stabilization mode and the follow mode.

The gimbal system according to an embodiment of the present disclosure includes a gimbal and the control device of the above-mentioned embodiment. The control device is disposed on the gimbal.

The UAV according to an embodiment of the present disclosure includes a body, and the gimbal system of the above-mentioned embodiment. The gimbal system is disposed on the body.

The gimbal control method according to the embodiments of the present disclosure can control the rotation of the gimbal based on the comparison result of the current attitude of the rotating shaft frame and the threshold attitude. Not only it is possible to switch the stabilization mode to the follow mode when the gimbal is about to hit the limit in the stabilization mode to prevent the gimbal's rotating shaft frame from hitting the mechanical limit and affecting the working effect of the payload. Moreover, in the follow mode, when the user wants to switch the stabilization mode, it will automatically switch to the stabilization mode, which ensures the working effect of the payload being carried by the gimbal. For example, the camera mounted on the gimbal will not experience image shake; or, the sensor mounted on the gimbal will not cause error; or, the field of view of the fill light mounted on the gimbal will not deviate from the object to be filled.

The additional aspects and advantages of the present disclosure will become apparent in the following description, or can be learned through practice of the present disclosure.

### BRIEF DESCRIPTION OF THE DRAWINGS

The above and/or additional aspects and advantages of the present disclosure will become obvious and easy to understand from the description of embodiments in conjunction with the following drawings.
FIG. 1 is a schematic diagram of a three-dimensional structure of a UAV according to some embodiments of the present disclosure.
FIG. 2 is a schematic diagram of a three-dimensional structure of a gimbal system according to some embodiments of the present disclosure.
FIG. 3 to FIG. 7 are flowcharts of a gimbal control method according to some embodiments of the present disclosure.
FIG. 8 is a schematic diagram of a connection between a gimbal system and a computer-readable storage medium according to some embodiments of the present disclosure.

### DETAILED DESCRIPTION OF THE EMBODIMENTS

Reference will now be made in detail to exemplary embodiments, examples of which are illustrated in the accompanying drawings, in which the same or similar reference numbers throughout the drawings represent the same or similar elements or elements having same or similar functions. Embodiments described below with reference to drawings are merely exemplary and used for explaining the present disclosure, and should not be understood as limitation to the present disclosure.

In the description of the present disclosure, it should be understood that the terms "first,", "second," etc. are only used to indicate different components, but do not indicate or imply the order, the relative importance, or the number of the components. Further, in the description of the present disclosure, unless otherwise specified, the term "first," or "second" preceding a feature explicitly or implicitly indicates one or more of such feature

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements or interactions of two elements, which can be understood by those skilled in the art according to specific situations.

Various embodiments and examples are provided in the following description to implement different structures of the present disclosure. In order to simplify the present disclosure, certain elements and settings will be described. However, these elements and settings are only examples and are not intended to limit the present disclosure. In addition, reference numerals may be repeated in different examples in the disclosure. This repeating is for the purpose of simplification and clarity and does not refer to relations between different embodiments and/or settings. Furthermore, examples of different processes and materials are provided in the present disclosure. However, it would be appreciated by those skilled in the art that other processes and/or materials may be also applied.

Next, the embodiments of the present disclosure will be described in detail. Illustrations of the embodiments are shown in the accompanying drawings. The same or similar reference numerals indicate the same or similar elements or elements having the same or similar functions. The embodiments described below with reference to the accompanying drawings are illustrative, are used to explain the present disclosure, and should not be understood as limiting the present disclosure.

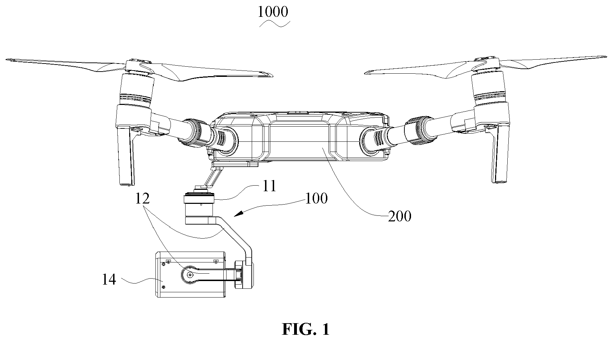

Referring to FIG. 1, an embodiment of the present disclosure provides a UAV 1000. The UAV 1000 includes a gimbal system 100 and a body 200. The gimbal system 100 is disposed on the body 200.

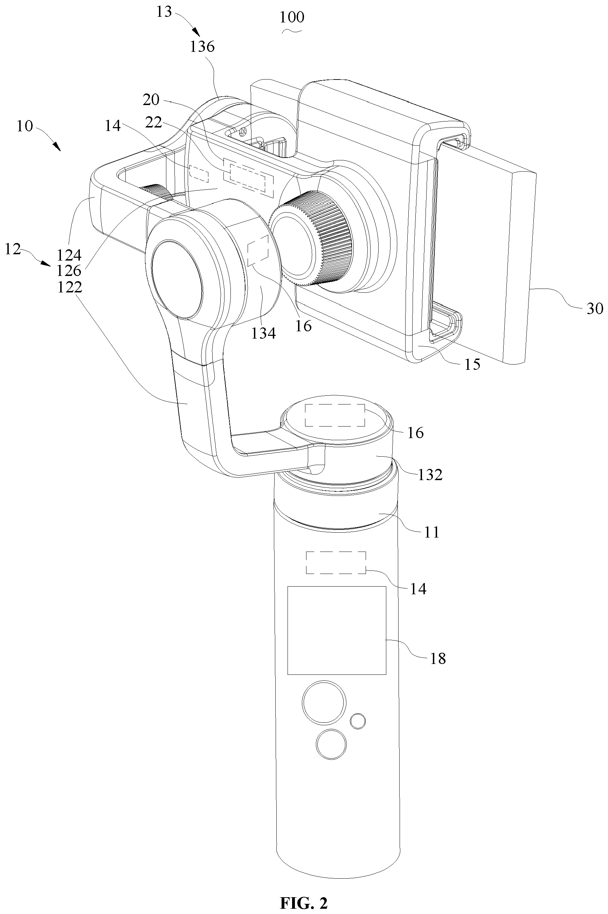

Referring to FIG. 1 and FIG. 2, the gimbal system 100 includes a gimbal 10, a control device 20 of the gimbal 10, and a payload 30. The control device 20 is disposed on the gimbal 10.

The gimbal 10 may include a base 11, a rotating shaft frame 12, a motor assembly 13, an inertial measurement unit 14, a payload bracket 15, and a joint angle assembly 16. The rotating shaft frame 12 may be disposed on the base 11 and used to carry the payload 30.

The gimbal 10 may be a handheld gimbal or a gimbal 10 set on the UAV 1000. In order to reduce the length of the description, the following explanations are provided by taking the gimbal 10 as a handheld gimbal as an example. The principle is similar when the gimbal 10 is a gimbal set on the UAV 1000, which will not be repeated here. As shown in FIG. 2, the gimbal 10 is a three-axis handheld gimbal. In other embodiments, the gimbal 10 may also be a two-axis handheld gimbal or a single-axis handheld gimbal, etc.

More specifically, the rotating shaft frame 12 may include a yaw axis frame 122, a roll axis frame 124, and a pitch axis frame 126. The motor assembly 13 may include a yaw axis motor 132, a roll axis motor 134, and a pitch axis motor 136. The yaw axis frame 122 may be mounted on the base 11, the roll axis frame 124 may be mounted on the yaw axis frame 122, and the pitch axis frame 126 may be mounted on the roll axis frame 124. The yaw axis motor 132 may be mounted on the base 11 and used to control the rotation of the yaw axis frame 122, the roll axis motor 134 may be mounted on the yaw axis frame 122 and used to drive the roll axis frame 124 to rotate, and the pitch axis motor 136 may be mounted on the roll axis frame 124 and used to drive the pitch axis frame 126 to rotate.

Further, a mechanical limit is generally disposed on the rotating shaft frame 12. When the rotating shaft frame 12 hits the mechanical limit, it can no longer rotate in the original direction of rotation. For example, in some embodiments, the pitch axis frame 126 and the roll axis frame 124 may be provided with the mechanical limits, and the yaw axis frame 122 may not be provided with the mechanical limit. It can be understood that in other embodiments, the pitch axis frame 126, roll axis frame 124, and yaw axis frame 122 may all be provided with the mechanical limits, or none of them may be provided with the mechanical limit, or the mechanical limit may be set in any other suitable combination, which is not limited here. Further, the mechanical limit of the rotating shaft frame 12 of different types of gimbals 10 may be the same or different, which is not limited in this embodiment.

It can be understood that when the gimbal 10 is a single-axis handheld gimbal, the rotating shaft frame 12 of the gimbal 10 may include one rotating shaft frame 12. For example, the rotating shaft frame 12 of the gimbal 10 may include one of the yaw axis frame 122, the roll axis frame 124, and the pitch axis frame 126. Correspondingly, the motor assembly 13 may include one of the yaw axis motor 132, the roll axis motor 134, and the pitch axis motor 136. When the gimbal 10 is a two-axis handheld gimbal, the rotating shaft frame 12 of the gimbal 10 may include two frames 12. For example, the rotating shaft frame 12 of the gimbal 10 may include any two of the yaw axis frame 122, the roll axis frame 124, and the pitch axis frame 126. Correspondingly, the motor assembly 13 may include two of the yaw axis motor 132, the roll axis motor 134, and the pitch axis motor 136, which is not limited here. In addition, although as shown in FIG. 2, the yaw axis frame 122 is connected to one end of the roll axis frame 124, and the other end of the roll axis frame 124 is connected to the pitch axis frame 126, but the structure of the rotating shaft frame 12 in the embodiments of the present disclosure is not limited to this. The yaw axis frame 122, the roll axis frame 124, and the pitch axis frame 126 may also be connected in other orders.

The inertial measurement unit 14 may be disposed on the rotating shaft frame 12. For example, one inertial measurement unit 14 may be disposed on the rotating shaft frame 12. More specifically, the inertial measurement unit 14 may be disposed on the pitch axis frame 126, and the inertial measurement unit 14 may detect the current attitude of the yaw axis motor 132, the roll axis motor 134, and the pitch axis motor 136. The inertial measurement unit 14 may also cooperate with the joint angle assembly 16 to calculate the attitude of the base 11 based on the attitude of the payload 30 and the joint angle data. Alternatively, there may be two inertial measurement units 14 and they may be respectively disposed on the base 11 and the rotating shaft frame 12. More specifically, the inertial measurement units 14 may be disposed on the base 11 and the pitch axis frame 126, and the inertial measurement units 14 may detect the current attitude of the base 11, the yaw axis frame 122, the roll axis frame 124, and the pitch axis frame 126. Of course, the inertial measurement unit 14 may also be disposed in other suitable positions. There are two inertial measurement units 14 in this embodiment of the present disclosure and they are respectively disposed on the base 11 and the pitch axis frame 126. Further, the inertial measurement unit 14 may include at least one of an accelerometer or a gyroscope.

The payload bracket 15 may be mounted on the pitch axis frame 126, and the payload bracket 15 may be used to mount and fix a payload 30.

The joint angle assembly 16 may be disposed on the motor assembly 13 of the gimbal 10, and may be used to obtain the joint angle of the motor assembly 13 and send it to a processor 22 of the control device 20. The joint angle assembly 16 may include one or more of a potentiometer, a Hall sensor, and a magnetic encoder. For example, in some embodiments, for a three-axis gimbal, each of the yaw axis motor 132, the roll axis motor 134, and the pitch axis motor 136 may correspond to a joint angle assembly 16. In this embodiment, there is no need to dispose an inertial measurement unit 14 on the base 11 to detect the current attitude of the base 11. The current attitude of the base 11 may be calculated based on the joint angle of the motor assembly 13 and the current attitude of the rotating shaft frame 12, which can reduce the number of inertial measurement units 14 and save costs. It can be understood that the above method is merely a schematic description a method of obtaining the current attitude of the base 11, and the method of obtaining the current attitude of the base 11 is not limited to this embodiment of the present disclosure.

The control device 20 may include a processor 22. More specifically, the processor 22 may be disposed on the base 11. Of course, the control device 20 may also be disposed on the yaw axis frame 122, the roll axis frame 124, and the pitch axis frame 126, which is not limited here.

In some embodiments, the current operating mode of the gimbal 10 may include a stabilization mode and a follow mode. The gimbal 10 can maintain the stabilization mode, maintain the follow mode, and switch between the stabilization mode and the follow mode. The stabilization mode may refer to the gimbal always maintaining the stability of a predetermined reference direction (such as the horizontal direction). The gimbal 10 can perform a negative feedback adjustment on the user's operation to offset the possible shaking and maintain the stability of the payload 30 (such as a camera, a mobile phone, etc.) being carried on the gimbal 10. Take the pitch as an example. In the stabilization mode, when the user controls the base 11 of the handheld gimbal to tilt, the camera will not be tilted along with it, but will still maintain the original imaging angle (generally horizontal). The reason is that when the base 11 is tilted, the pitch axis frame 126 of the gimbal 10 can perform the negative feedback adjustment to maintain the camera being carried by the gimbal 10 in the horizontal direction. The negative feedback adjustment here means that when the user controls the base 11 to tilt, the gimbal 10 can control the camera to tilt a corresponding angle, thereby maintaining the camera level and achieving stability of the camera. Or, when the user controls the base 11 to tilt, the gimbal 10 can control the camera to tilt a corresponding angle to maintain the camera level and achieve stability of the camera. For example, if the base 11 is raised by 15°, the gimbal 10 can control the pitch axis frame 126 to bend by 15°, such that the camera can remain level. The follow mode may refer to the gimbal 10 maintaining a relative angle between the payload 30 and the corresponding rotating shaft frame 12 unchanged, thereby following the rotation of the rotating shaft frame 12, or maintaining the relative angle between the payload 30 and the base 11 unchanged, thereby following the base 11 to rotate. For example, if the user controls the base 11 to tilt by 15°, the gimbal 10 can control the pitch axis frame to tilt by 15°, such that the relative angle between the payload 30 and the base 11 can remain basically unchanged. Or, if the user controls the base 11 to bend by 15°, the gimbal 10 can control the pitch axis frame to raise by 15°, such that the relative angle between the payload 30 and the base 11 can remain basically unchanged. It should be noted that the gimbal 10 maintaining the stabilization mode, maintaining the follow mode, and switching between the stabilization mode and the follow mode can simultaneously perform the operations of maintaining the stabilization mode, maintaining the follow mode, and switching between the stabilization mode and the follow mode on multiple rotating shaft frames 12, or perform the operations of maintaining the stabilization mode, maintaining the follow mode, and switching between the stabilization mode and the follow mode individually on each of the rotating shaft frames 12. In one embodiment of the present disclosure, the control device 20 can individually perform the operations of maintaining the stabilization mode, maintaining the follow mode, and switching between the stabilization mode and the follow mode for each rotating shaft frame 12.

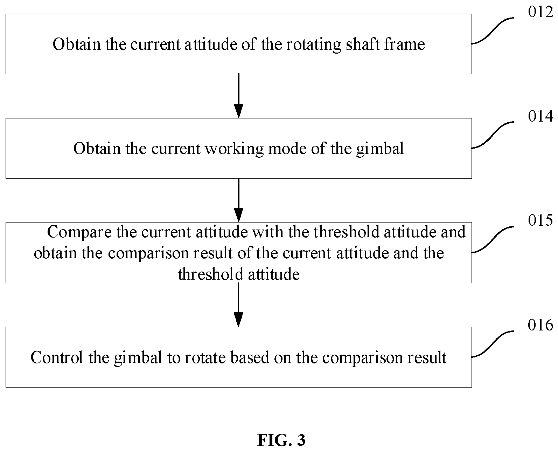

Referring to FIG. 2 and FIG. 3, the gimbal system 100 according to an embodiment of the present disclosure can perform a control method shown in FIG. 3. More specifically, the control method includes:
012, obtaining a current attitude of the rotating shaft frame 12.
014, obtaining a current operating mode of the gimbal 10.
015, comparing the current attitude with a threshold attitude and obtaining a comparison result of the current attitude and the threshold attitude.
016, controlling the gimbal to rotate based on the comparison result.

In some embodiments, after the current attitude of the rotating shaft frame 12 is detected and obtained by the inertial measurement unit 14, it can be sent to the processor 22 of the control device 20. The processor 22 can be configured to obtain the current attitude of the rotating shaft frame 12, obtain the current operating mode of the gimbal 10, and control the rotation of the gimbal 10 based on the current attitude and the current operating mode.

That is, the processes at 012, 014, and 016 can all be performed by the processor 22.

More specifically, the current attitude may include a current yaw attitude, a current roll attitude, and a current pitch attitude. The above control method will be explained below by taking the current attitude as the current yaw attitude as an example. The principle of the current attitude being the current roll attitude and the current pitch attitude is basically the same and will not be repeated here.

When the gimbal 10 is operating in the stabilization mode, since the yaw axis frame 122 is mounted on the base 11, in the stabilization mode, take the predetermined reference direction (such as the true north or a user-define direction, this description uses the true north as the default reference direction as an example) as the stabilization attitude of the yaw axis frame 122 as an example. When the user performs a yaw operation on the base 11, the current yaw attitude of the yaw axis frame 122 can be maintained at true north (i.e., remain unchanged). Since the yaw axis frame 122 is mounted on the base 11, although the current yaw attitude of the yaw axis frame 122 has not changed, the current yaw attitude of the base 11 may change following the user's yaw operation on the base 11. The current yaw attitude in the embodiments of the present disclosure may refer to the current yaw attitude of the base 11, and the current yaw attitude of the base 11 may be obtained by the inertial measurement unit 14 disposed on the base 11 and sent to the processor 22. Similarly, the current roll attitude may be the current roll attitude of the yaw axis frame 122, and the current pitch attitude may be the current pitch attitude of the roll axis frame 124. The inertial measurement unit 14 can obtain the current yaw attitude of the base 11 in real time, and then the inertial measurement unit 14 can send the current yaw attitude to the processor 22. After obtaining the current yaw attitude, the processor 22 can be configured to obtain the current operating mode of the gimbal 10 (that is, the stabilization mode), and then the processor 22 can control the gimbal 10 to rotate based on the comparison result of the current yaw attitude and the threshold attitude. More specifically, the processor 22 can be configured to control the gimbal 10 to maintain the stabilization mode to rotate based on the comparison result of the current yaw attitude and the threshold attitude, the processor 22 can be configured to control the gimbal 10 to maintain the follow mode to rotate based on the comparison result of the current attitude and the threshold attitude, and the processor 22 can be configured to control the gimbal 10 to switch between the stabilization mode and the follow mode based on the comparison result of the current attitude and the threshold attitude, and then control the gimbal 10 to rotate in the switched operating mode.

More specifically, when the current operating mode is the stabilization mode, the threshold attitude may be a predetermined attitude, where the predetermined attitude may include any one or more of a predetermined yaw attitude, a predetermined roll attitude, and a predetermined pitch attitude. The predetermined yaw attitude may refer to the yaw attitude of the base 11 when the yaw axis frame 122 reaches the mechanical limit, the predetermined roll attitude may refer to the roll attitude of the yaw axis frame 122 when the roll axis frame 124 reaches the mechanical limit, and the predetermined pitch attitude may refer to the pitch attitude of the roll axis frame 124 when the pitch axis frame 126 reaches the mechanical limit. The processor 22 can be configured to determine whether the current yaw attitude reaches the predetermined yaw attitude (i.e., determine whether the yaw axis frame 122 will hit the mechanical limit), then switch the stabilization mode to the follow mode when the current yaw attitude reaches the predetermined yaw attitude. At this time, when the user continues the yaw operations, the yaw axis frame 122 will keep the relative angle unchanged with the base 11 and rotate synchronously with the base 11, thereby ensuring that the yaw axis frame 122 will not hit the mechanical limit. In other embodiments, the limit may be an attitude limit. By limiting the attitude, the attitude difference between the attitude of the camera and the attitude of the rotating shaft frame may be smaller than the mechanical limit range. At a certain angle before the yaw axis frame 122 reaches the mechanical limit (such as 5°, etc.), the stabilization mode of the gimbal 10 may be switched to the follow mode, such that there is a certain amount of redundancy, which can further ensure that the yaw axis frame 122 will not hit the mechanical limit.

Further, when the current operating mode is the follow mode, the threshold attitude may be a preset attitude. Based on the comparison result between the current attitude of the rotating shaft frame 12 and the preset attitude, the gimbal 10 can be controlled to switch from the follow mode to the stabilization mode, where the preset attitude may include any one or more of a preset yaw attitude, a preset roll attitude, and a preset pitch attitude. Further, the preset attitude may be different from the predetermined attitude. For example, the predetermined attitude may be 30°, and the preset attitude may be 5°. The predetermined attitude and the preset attitude may also be set based on a user input. In other embodiments, the preset attitude may be equal to the predetermined attitude, which is not limited here. The processor 22 can be configured to compare the current attitude with the preset attitude. When the current attitude is less than (or less than equal to) the preset attitude (that is, the user wants to switch from the follow mode to the stabilization mode to maintain stable imaging), the processor 22 can be configured to control the motor assembly 13 to rotate the rotating shaft frame 12, such that the gimbal 10 can switch from the follow mode to the stabilization mode, thereby preventing of the user walking, arm shaking, etc. from affecting the working effect of the payload 30.

The control method of the gimbal 10 according to an embodiment of the present disclosure can control the rotation of the gimbal based on the comparison result of the current attitude of the rotating shaft frame 12 and the threshold attitude, which can not only switch the stabilization mode to the follow mode when the gimbal 10 is about the hit the limit in the stabilization mode to prevent the rotating shaft frame 12 of the gimbal 10 from hitting the mechanical limit and affecting the working effect of the payload 30, but in the follow mode, when the user wants to switch the stabilization mode, can also automatically switch to the stabilization mode, which can ensure the working effect of the payload 30 being carried by the gimbal 10. For example, the camera mounted on the gimbal 10 will not experience image shake; or, the sensor mounted on the gimbal 10 will not cause error; or, the field of view of the fill light mounted on the gimbal 10 will not deviate from the object to be filled.

In some embodiments, the current operating mode of the gimbal 10 may be determined based on the user input.

More specifically, the user can input the operating mode to control the gimbal 10 based on the needs. For example, the user can uniformly set the multiple rotating shaft frame 12 of the gimbal 10 to the stabilization mode or the follow mode; or the user can individually set each rotating shaft frame 12 of the gimbal 10 to the stabilization mode or the follow mode. For example, the user can set the yaw axis frame 122 to the stabilization mode or the follow mode, set the roll axis frame 124 to the stabilization mode or the follow mode, and the set the pitch axis frame 126 to the stabilization mode or the follow mode through an input.

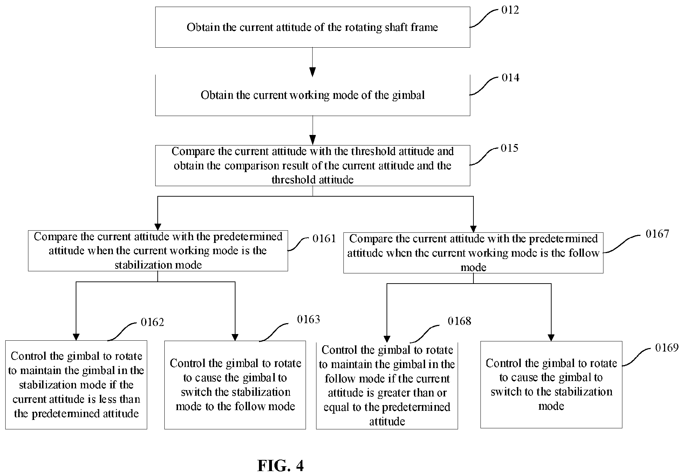

Referring to FIG. 2 and FIG. 4, in some embodiments, when the current operating mode of the gimbal 10 is the stabilization mode, the threshold attitude is the predetermined attitude, and the process at 016 may include:
0161, comparing the current attitude with the predetermined attitude; and
0162, controlling the gimbal 10 to rotate to maintain the gimbal 10 in the stabilization mode if the current attitude is less than or equal to the predetermined attitude.

In some embodiments, the processor 22 can be configured to compare the current attitude with the predetermined attitude, and when the current attitude is less than or equal to the predetermined attitude, control the gimbal 10 to rotate such that the gimbal 10 can maintain the stabilization mode.

That is, the processes at 0161 and 0162 may be performed by the processor 22.

More specifically, when the gimbal 10 is in the stabilization mode, the inertial measurement unit 14 can obtain the current attitude in real time and send it to the processor 22. The processor 22 can be configured to compare the current attitude with the predetermined attitude, and if the current attitude is less than (or less than equal to) the predetermined attitude, that is, the rotating shaft frame 12 has not reached the mechanical limit, the rotating shaft frame 12 will not hit the mechanical limit. At this time, the processor 22 may only need to control the gimbal 10 to continue to maintain the stabilization mode. For example, if the current yaw attitude of the base 11 is less than (or less than equal to) the predetermined yaw attitude, the processor 22 may be configured to control the yaw axis motor 132 to rotate the yaw axis frame 122 to maintain the yaw axis frame 122 in the stabilization mode. If the current roll attitude of the yaw axis frame 122 is less than (or less than equal to) the predetermined roll attitude, the processor 22 may be configured to control the roll axis motor 134 to rotate the roll axis frame 124, such that the roll axis frame 124 can maintain the stabilization mode. Alternatively, if the current pitch attitude of the roll axis frame 124 is less than (or less than equal to) the predetermined pitch attitude, the processor 22 may be configured to control the pitch axis motor 136 to rotate the pitch axis frame 126 to maintain the pitch axis frame 126 in the stabilization mode. Through the above control method, the normal operation of the gimbal 10 can be maintained while ensuring that the rotating shaft frame 12 does not hit the mechanical limit. In other embodiments, the predetermined yaw attitude may be less than the current yaw attitude of the base 11 when the yaw axis frame 122 reaches the mechanical limit, the predetermined roll attitude may be less than the current roll attitude of the yaw axis frame 122 when the roll axis frame 124 reaches the mechanical limit, and the predetermined pitch attitude may be less than the current pitch attitude of the roll axis frame 124 when the pitch axis frame 126 reaches the limit to reserve a certain amount of redundancy to further prevent the rotating shaft frame 12 from hitting the mechanical limit.

Continue to refer to FIG. 2 and FIG. 4, in some embodiments, when the current operating mode of the gimbal 10 is the stabilization mode, the threshold attitude is the predetermined attitude, and the process at 016 may further include:
0163, controlling the gimbal 10 to rotate such that the gimbal 10 switches the stabilization mode to follow mode if the current attitude is greater than or equal to the predetermined attitude.

In some embodiments, the processor 22 may also be configured to control the rotation of the gimbal 10 when the current attitude is greater than or equal to the predetermined attitude, such that the gimbal 10 can switch the stabilization mode to the follow mode.

That is, the process at 0163 can be implemented by the processor 22.

More specifically, when the current operating mode of the gimbal 10 is the stabilization mode, the inertial measurement unit 14 may obtain the current attitude in real time and send it to the processor 22. The processor 22 may be configured to compare the current attitude with the predetermined attitude. When the current attitude is greater than or equal to the predetermined attitude (that is, the rotating shaft frame 12 is about to hit the mechanical limit), the processor 22 may be configured to switch the stabilization mode of the gimbal 10 to the follow mode and control the rotation of the motor assembly 13, such that the gimbal 10 can rotate in the follow mode. For example, if the current yaw attitude of the base 11 is greater than (greater than or equal to) the predetermined yaw attitude, the processor 22 may be configured to control the yaw axis motor 132 to rotate the yaw axis frame 122, such that the yaw attitude of the payload 30 can follow the current yaw attitude of the base 11. Alternatively, if the current roll attitude of the yaw axis frame 122 is greater than (greater than or equal to) the predetermined roll attitude, the processor 22 may be configured to control the roll axis motor 134 to rotate the roll axis frame 124, such that the roll attitude of the payload 30 can follow the current roll attitude of the yaw axis frame 122. Alternatively, if the current pitch attitude of the roll axis frame 124 is greater than (greater than or equal to) the predetermined pitch attitude, the processor 22 may be configured to control the pitch axis motor 136 to rotate the pitch axis frame 126, such that the pitch attitude of the payload 30 can follow the current pitch attitude of the roll axis frame 124. In this embodiment, when the current attitude of the rotating shaft frame 12 is greater than (greater than or equal to) the predetermined attitude (that is, the rotating shaft frame 12 is about to hit the mechanical limit), the stabilization mode of the gimbal 10 can switch to the follow mode, which can prevent the rotating shaft frame 12 from hitting the mechanical limit.

In some embodiments, when the current operating mode of the gimbal 10 is the stabilization mode, the processor 22 may be configured to control the gimbal 10 to maintain the stabilization mode when the current attitude is less than or equal to the predetermined attitude, and the processor 22 may be configured to switch the stabilization mode of the gimbal 10 to the follow mode when the current attitude is greater than the predetermined attitude. Alternatively, the processor 22 may be configured to control the gimbal 10 to maintain the stabilization mode when the current attitude is less than the predetermined attitude, and the processor 22 may be configured to switch the stabilization mode of the gimbal 10 to the follow mode when the current attitude is greater than or equal to the predetermined attitude.

As such, by reasonably setting the processor 22 to execute the determination conditions for maintaining the stabilization mode and switching the stabilization mode to the follow mode operations, it can prevent the processor 22 from being unable to determine which method to execute when the current attitude is equal to the predetermined attitude, or executing both methods at the same time, and ensure the normal operation of the gimbal 10.

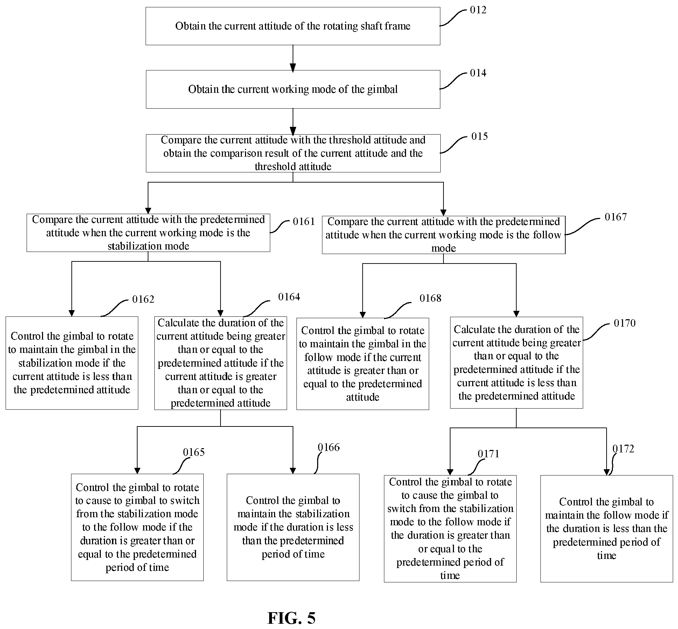

Referring to FIG. 2 and FIG. 5, in some embodiments, when the current operating mode of the gimbal 10 is the stabilization mode, the threshold attitude is the predetermined attitude, the process at 016 may further include:
0164, calculating a duration of the current attitude being greater than or equal to the predetermined attitude if the current attitude is greater than or equal to the predetermined attitude; and
0165, controlling the gimbal 10 to rotate such that the gimbal 10 switches the stabilization mode to the follow mode if the duration is greater than or equal to a predetermined period of time.

In some embodiments, the processor 22 may also be configured to calculate the duration of the current attitude being greater than or equal to the predetermined attitude if the current attitude is greater than or equal to the predetermined attitude when the current attitude is greater than or equal to the predetermined attitude, and control the gimbal 10 to rotate such that the gimbal 10 switches the stabilization mode to the follow mode if the duration is greater than or equal to the predetermined period of time.

That is, the processor 22 can implement the processes at 0164 and 0165.

More specifically, when the gimbal 10 is working in the stabilization mode, after the processor 22 compares the current attitude with the predetermined attitude, when the current attitude is greater than or equal to the predetermined attitude, it can start to calculate the duration of the current attitude being greater than or equal to the predetermined attitude. After the duration is greater than or equal to the predetermined period of time (e.g., the predetermined period of time may be 5 seconds, 6 seconds, 7 seconds, etc.), the processor 22 may be configured to switch the current operating mode of the gimbal 10 to the follow mode and control the motor assembly 13 to rotate, such that the gimbal 10 can rotate in the follow mode. Since it is needed to calculate the duration of the current attitude being greater than or equal to the predetermined attitude, if the predetermined attitude is equal to the attitude of the base 11 or the rotating shaft frame 12 when the rotating shaft frame 12 reaches the mechanical limit, the rotating shaft frame 12 may have hit the mechanical limit when the current attitude is greater than or equal to the duration of the predetermined period of time. Therefore, the predetermined attitude should be slightly less than the attitude of the base 11 or the rotating shaft frame 12 when the rotating shaft frame 12 reaches the mechanical limit.

When the user uses the handheld gimbal for imaging and other operations, sometimes it is needed to adjust the imaging angle. However, in the stabilization mode, the rotating shaft frame 12 of the gimbal 10 will always maintain the stabilization attitude. For example, the roll axis frame 124 and the pitch axis frame 126 may always maintain a horizontal stabilization attitude, such that no matter how the user adjusts the camera, it can only remain horizontal. The user can only manually switch to the follow mode and then adjust it or continue to roll or pitch until the rotating shaft frame 12 reaches the limit to forcibly change the imaging angle. However, this will cause the rotating shaft frame 12 to hit the rotating shaft frame 12 and cause the capture image to shake, which affects the entire imaging experience. In this embodiment, by comparing the current attitude with the predetermined attitude, when the current attitude is greater than or equal to the predetermined attitude, the duration of the current attitude being greater than or equal to the predetermined attitude can be calculated, and whether the duration is greater than or equal to the predetermined period of time can be determined. When the duration is greater than the predetermined period of time (the user continues to image when the current attitude is greater than or equal to the predetermined attitude, at this time, the user most likely wants to change the imaging angle), switch the stabilization mode to the follow mode. This allows the user to change the imaging angle without manually switching to the follow mode and without hitting the mechanical limit of the rotating shaft frame 12, which achieves intelligent switch and a better user experience.

Continue to refer to FIG. 2 and FIG. 5, in some embodiments, when the current operating mode of the gimbal 10 is the stabilization mode, the threshold attitude is the predetermined attitude, the process at 016 may further include:
0166, controlling the gimbal 10 to maintain the stabilization mode when the current attitude is greater than or equal to the predetermined attitude and the duration is less than the predetermined period of time.

In some embodiments, the processor 22 may be further configured to control the gimbal 10 to maintain the stabilization mode when the current attitude is greater than or equal to the predetermined attitude and the duration is less than the predetermined period of time.

That is, the process at 0166 can be implemented by the processor 22.

More specifically, the user sometimes only changes the holding angle of the handheld gimbal 10 to hold the handheld gimbal 10 more comfortably, instead of adjusting the imaging angle of the payload 30 (such as a camera) carried by the handheld gimbal 10. At this time, the processor 22 may be configured to determine whether the user wants to change the imaging angle of the camera or just temporarily adjust the holding angle by determining the relationship between the duration of the current attitude being greater than or equal to the predetermined attitude and the predetermined period of time. When the duration is less than the predetermined period of time (that is, the user is only temporarily adjusting the holding angle), the gimbal 10 can be controlled to maintain the stabilization mode to prevent erroneous switching of the current operating mode of the gimbal 10, and the user experience is better.

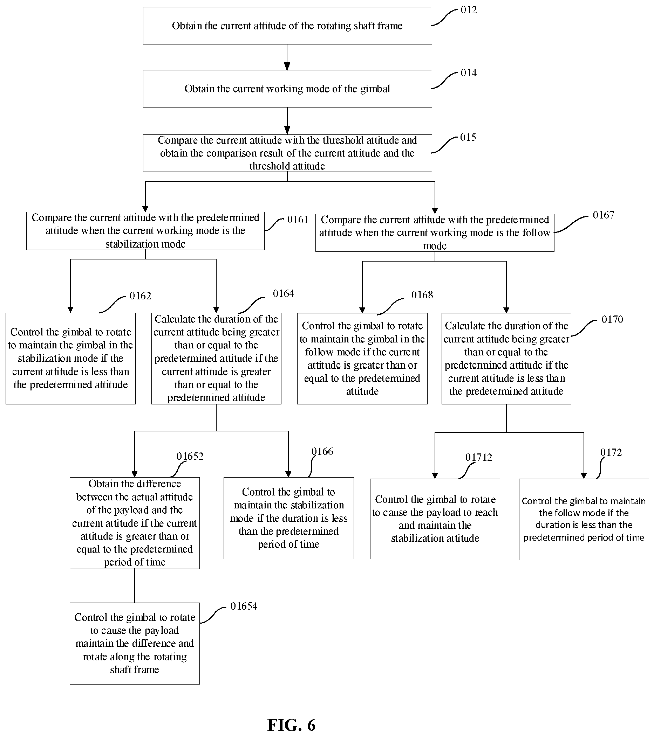

Referring to FIG. 2 and FIG. 6, in some embodiments, the process at 0165 may include:
01652, obtaining a difference between an actual attitude of the payload 30 and the current attitude; and
01654, controlling the gimbal 10 to rotate such that the payload 30 maintains the difference to follow the rotation of the rotating shaft frame 12.

In some embodiments, the processor 22 may be further configured to obtain the difference between the actual attitude of the payload 30 and the current attitude, and control the gimbal 10 to rotate, such that the payload 30 can maintain the difference to follow the rotation of the rotating shaft frame 12.

That is, the processor 22 can implement the processes at 01652 and 01654.

More specifically, when the processor 22 controls the gimbal 10 to switch the stabilization mode to the follow mode, the processor 22 may be configured to first obtain the actual attitude of the payload 30 through the inertial measurement unit 14. In some embodiments, the actual attitude of the payload 30 may refer to the yaw attitude, the roll attitude, and the pitch attitude of the payload 30 when the ground is used as the reference frame. In other embodiments, the attitude of the payload 30 may also use the gimbal 10 as a reference frame, or other suitable reference frames, which are not limited here. Further, the processor 22 may be configured to obtain the current attitude and calculate the difference (generally the angle difference) between the current attitude and the actual attitude, and control the rotation of the motor assembly 13, such that the payload 30 can maintain the angle difference and follow the rotation of the rotating shaft frame 12 (when the current attitude if the current yaw attitude of the base 11, the payload 30 may rotate with the base 11 to perform the yaw operation). Take the current attitude as the current roll attitude of the yaw axis frame 122 and the actual attitude as the roll attitude of the payload 30 as an example. The principle is similar when the current attitude is the current yaw attitude of the base 11 or the current pitch attitude of the roll axis frame 124, and will not be repeated here. In the stabilization mode, when the user rolls the gimbal 10, the roll attitude of the payload 30 generally remains horizontal. That is, the roll attitude of the payload 30 may be roll.r = 0 and the current roll attitude may be roll.c. When the processor 22 switch the stabilization mode to the follow mode, the processor 22 may first calculate the angle difference between the current roll attitude and the roll attitude of the payload 30 (i.e., roll.c- roll.r). That is, calculating the angle difference between the current roll attitude and the horizontal direction (roll.c - roll.r). At this time, the angle value of the current roll attitude may be the angle difference. Subsequently, the processor 22 may be configured to control the roll axis motor 134 to rotate the roll axis frame 124, such that the angle difference between the payload 30 and the yaw axis frame 122 can remain unchanged, and the roll attitude of the payload 30 can follow the current roll attitude of the yaw axis frame 122 for the roll operation. For example, the yaw axis frame 122 may rotate 15° clockwise along the roll axis direction, and the payload 30 may also rotate 15° clockwise along the roll axis direction. It can be understood that the processor 22 may also be configured to obtain a suitable angular velocity or angular acceleration value through the difference between the current attitude and the actual attitude, such that the processor 22 can control the roll axis motor 134 to rotate the roll axis frame 124, which is not limited here.

Continue to refer to FIG. 2 and FIG. 4, in some embodiments, when the current operating mode of the gimbal 10 is the follow mode, the threshold attitude is the preset attitude, the process at 016 may further include:
0167, comparing the current attitude with the preset attitude; and
0168, controlling the gimbal 10 to rotate to maintain the gimbal 10 in the follow mode if the current attitude is greater than or equal to the preset attitude.

In some embodiments, when the current operating mode of the gimbal 10 is the follow mode, the processor 22 may be configured to compare the current attitude with the preset attitude, and control the gimbal 10 to rotate when the current attitude is greater than or equal to the preset attitude, such that the gimbal 10 can maintain the follow mode.

That is, the processor 22 can implement the processes at 0167 and 0168.

More specifically, when the gimbal 10 is in the follow mode, the inertial measurement unit 14 may obtain the current attitude of the gimbal 10 in real time, and the processor 22 may be configured to compare the current attitude with the preset attitude. When the current attitude is greater than (or greater than or equal to) the preset attitude, the processor 22 may control the motor assembly 13 to rotate the rotating shaft frame 12 to maintain the gimbal 10 in the follow mode. For example, if the current yaw attitude of the base 11 is greater than (or greater than or equal to) the preset yaw attitude, the processor 22 may control the yaw axis motor 132 to rotate the yaw axis frame 122, such that the yaw attitude of the payload 30 can follow the current yaw attitude of the base 11. Alternatively, if the current roll attitude of the yaw axis frame 122 is greater than (or greater than or equal to) the preset roll attitude, the processor 22 may control the roll axis motor 134 to rotate the roll axis frame 124, such that the roll attitude of the payload 30 can follow the current roll attitude of the yaw axis frame 122. Alternatively, if the current pitch attitude of the roll axis frame 124 is greater than (or greater than or equal to) the preset pitch attitude, the processor 22 may control the pitch axis motor 136 to rotate the pitch axis frame 126, such that the pitch attitude of the payload 30 can follow the current pitch attitude of the roll axis frame 124.

Continue to refer to FIG. 2 and FIG. 4, in some embodiments, the process at 016 may further include:
0169, controlling the gimbal 10 to rotate such that the gimbal 10 switches the follow mode to the stabilization mode if the current attitude is less than or equal to the preset attitude.

In some embodiments, the processor 22 may be further configured to control the gimbal 10 to rotate when the current attitude is less than or equal to the preset attitude, such that the gimbal 10 can switch the follow mode to the stabilization mode.

That is, the processor 22 can implement the process at 0169.

More specifically, the processor 22 may be configured to compare the current attitude with the preset attitude. When the current attitude is less than (or less than or equal to) the preset attitude, the processor 22 may control the motor assembly 13 to rotate the rotating shaft frame 12, such that the gimbal 10 can switch the follow mode to the stabilization mode. For example, the current attitude may be the current yaw attitude of the base 11, the preset attitude may be the preset yaw attitude, and the predetermined stabilization attitude of the yaw axis frame 122 may be the true north. When the current yaw attitude is less than (or less than or equal to) the preset yaw attitude, it may indicate that the user wants to adjust the imaging angle back to the true north. However, in the follow mode (including the stabilization mode switching to the follow mode, or the initial operating mode may be the follow mode), the yaw axis frame 122 may maintain a certain angle difference to follow the current yaw attitude of the base 11 for the yaw operation. This makes it difficult for users to adjust the camera's imaging angle to the true north and unable to maintain the camera toward the true north steadily, which will cause shaking due to the user's operation or walking, etc. In this application scenario, the processor 22 may control the yaw axis motor 132 to rotate the yaw axis frame 122 to switch the follow mode to the stabilization mode to maintain stable imaging in the true north direction.

In some embodiments, when the current operating mode of the gimbal 10 is the follow mode, the processor 22 may control the gimbal 10 to maintain the follow mode when the current attitude is greater than or equal to the preset attitude, and the processor 22 may switch the follow mode of the gimbal 10 to the stabilization mode when the current attitude is less than the preset attitude. Alternatively, the processor 22 may control the gimbal 10 to maintain the follow mode when the current attitude is greater than the preset attitude, and the processor 22 can switch the follow mode of the gimbal 10 to the stabilization mode when the current attitude is less than or equal to the preset attitude.

As such, by reasonably setting the processor 22 to execute the determination conditions for maintaining the follow mode and switching the follow mode to the stabilization mode operations, it can prevent the processor 22 from being unable to determine which method to execute when the current attitude is equal to the preset attitude, or executing both methods at the same time, and ensure the normal operation of the gimbal 10.

Continue to refer to FIG. 2 and FIG. 5, in some embodiments, when the current operating mode of the gimbal 10 is the follow mode, the process at 016 may further include:
0170, calculating a duration of the current attitude being less than or equal to the preset attitude if the current attitude is less than the equal to the preset attitude; and
0171, controlling the gimbal 10 to rotate such that the gimbal 10 switches the follow mode to the stabilization mode when the duration is greater than or equal to a predetermine period of time.

In some embodiments, the processor 22 may be further configured to calculate the duration of the current attitude being less than or equal to the preset attitude when the current attitude is less than the equal to the preset attitude, and control the gimbal 10 to rotate such that the gimbal 10 can switch the follow mode to the stabilization mode when the duration is greater than or equal to the predetermine period of time.

That is, the processor 22 can implement the processes at 0170 and 0171.

More specifically, when the gimbal 10 is working in the follow mode, after the processor 22 compares the current attitude with the preset attitude, if the current attitude is less than or equal to the preset attitude, the processor 22 may calculate the duration of the current attitude being less than or equal to the preset attitude. In addition, when the duration is greater than or equal to the predetermine period of time (e.g., the predetermine period of time may be 5 seconds, 6 seconds, 7 seconds, etc.), the processor 22 may control the motor assembly 13 to rotate the rotating shaft frame 12, such that the gimbal 10 can switch the follow mode to the stabilization mode. For example, when the current attitude is the current pitch attitude of the roll axis frame 124, and the preset attitude is the predetermined pitch attitude, when the current pitch attitude is less than or equal to the preset pitch attitude and the duration of the current pitch attitude being less than or equal to the preset pitch attitude is greater than or equal to the predetermine period of time, it may indicate that the user wants to adjust the imaging angle back to the stabilization mode (e.g., the horizontal direction). However, in the follow mode, the pitch axis frame 126 will maintain a certain angle difference to follow the current pitch attitude of the roll axis frame 124 for pitching. This makes it difficult for users to adjust the camera's imaging angle to the horizontal direction and unable to maintain the camera in the horizontal direction, which will cause shaking due to the user's operation or walking, etc. When the current pitch attitude is less than or equal to the preset pitch attitude and the duration of the current pitch attitude being less than or equal to the preset pitch attitude is greater than or equal to the predetermined period of time, the processor 22 may determine that the user wants to switch the gimbal 10 to the stabilization mode to maintain stable imaging. The processor 22 may control the pitch axis motor 136 to rotate the pitch axis frame 126, such that the pitch axis frame 126 can rotate in the stabilization mode, thereby ensuring the user's imaging effect. In other embodiments, when the user manually sets any one or more of the yaw axis frame 122, the roll axis frame 124, and the pitch axis frame 126 to the follow mode or the stabilization mode, the processor 22 may not perform the switching the current operating mode and use the user input instead to ensure user experience.

Continue to refer to FIG. 2 and FIG. 5, in some embodiments, when the current operating mode of the gimbal 10 is the follow mode, the process at 016 may further include:
0172, controlling the gimbal 10 to rotate to maintain the follow mode when the current attitude is less or equal to the preset attitude and the duration is less than the predetermined period of time.

In some embodiments, the processor 22 may be further configured to control the gimbal 10 to rotate to maintain the follow mode when the current attitude is less or equal to the preset attitude and the duration is less than the predetermined period of time.

That is, the processor 22 can implement the process at 0172.

More specifically, the processor 22 may determine whether the user wants to switch the gimbal 10 to the stabilization mode based on whether the duration of the current attitude being less than or equal to the preset attitude is less than the predetermined period of time. When the current attitude is less than or equal to the preset attitude and the duration is less than the predetermined period of time, the gimbal 10 can be controlled to rotate to maintain the follow mode, such that the determination is more accurate and the user experience is better.

Referring to FIG. 2 and FIG. 6, in some embodiments, the process at 0171 may include:
01712, controlling the gimbal 10 to rotate to make the payload 30 reach and maintain the stabilization attitude.

In some embodiments, the processor 22 may be further configured to control the gimbal 10 to rotate such that the payload 30 can reach and maintain the stabilization attitude.

That is, the processor 22 can implement the process at 01712.

More specifically, when the processor 22 controls the gimbal 10 to switch the follow mode to the stabilization mode, it can control the motor assembly 13 to rotate the rotating shaft frame 12, such that the payload 30 carried by the rotating shaft frame 12 can reach the stabilization attitude. The stabilization attitude may be a predetermined stabilization attitude (such as the attitude when the payload 30 is kept horizontal), a current actual attitude of the payload 30 (i.e., the actual attitude of the payload 30 when the follow mode is switched to the stabilization mode as the stabilization attitude), or an attitude of the stabilization mode before the current follow mode (i.e., the predetermined stabilization attitude of the rotating shaft frame 12 in the stabilization mode). The stabilization attitude may also be determined based on user input, or set based on actual needs to ensure the user's' imaging effect.

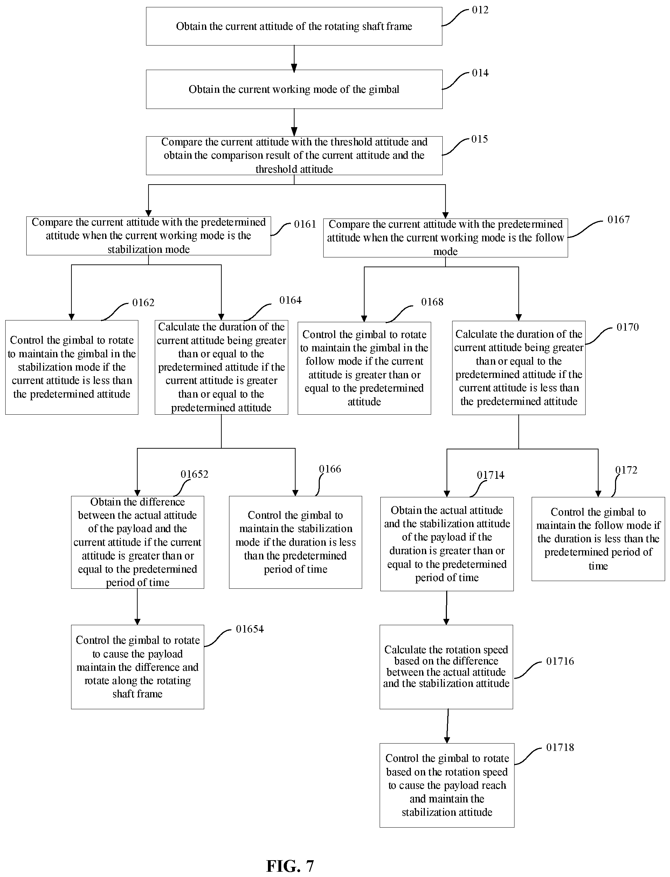

Referring to FIG. 2 and FIG. 7, in some embodiments, the process at 01712 may include:
01714, obtaining an actual attitude and a stabilization attitude of the payload 30;
01716, calculating a rotation speed based on a difference between the actual attitude and the stabilization attitude; and
01718, controlling the gimbal 10 to rotate based on the rotation speed to cause the payload 30 to reach and maintain the stabilization attitude.

In some embodiments, the processor 22 may be further configured to obtain the actual attitude and the stabilization attitude of the payload 30, calculating the rotation speed based on the difference between the actual attitude and the stabilization attitude, and control the gimbal 10 to rotate based on the rotation speed to cause the payload 30 to reach and maintain the stabilization attitude

That is, the processor 22 can implement the processes at 01714, 01716, and 01718.

More specifically, when the processor 22 controls the gimbal 10 to switch the follow mode to the stabilization mode, the inertial measurement unit 14 may detect the actual attitude of the payload 30 in real time and send it to the processor 22. After the processor 22 obtains the actual attitude of the payload 30, the processor 22 may calculate the difference between actual attitude of the payload 30 and the stabilization attitude (generally the angle difference). The actual attitude of the payload 30 may include any one or more of an actual yaw attitude, an actual roll attitude, and an actual pitch attitude. Correspondingly, the stabilization attitude may include any one or more of a yaw stabilization attitude, a roll stabilization attitude, and a pitch stabilization attitude. Subsequently, the processor 22 may calculate the rotation speed of the rotating shaft frame 12 based on the angle difference and the predetermined period of time (e.g., 1 second, 2 seconds, 3 seconds, etc.). At last, the processor 22 may control the motor assembly 13 to rotate the rotating shaft frame 12 at the rotation speed, such that the payload 30 can return from the current actual attitude to the stabilization attitude smoothly at a uniform speed, and the user experience is better. It can be understood that the processor 22 may obtain the appropriate angular velocity or angular acceleration value of the rotating shaft frame 12 through the difference between the current attitude and the actual attitude, such that the processor 22 may control the motor assembly 13 to rotate the rotating shaft frame 12 at the rotation speed.

For example, if the current yaw attitude of the base 11 is less than (or less than or equal to) the preset yaw attitude, the processor 22 may control the yaw axis motor 132 to rotate the yaw axis frame 122 based on a first rotation speed, such that the payload 30 can reach and maintain the yaw stabilization attitude (e.g., the yaw stabilization attitude may be the true north) smoothly. The first rotation speed may be obtained based on the difference between the actual yaw attitude of the payload 30 and the yaw stabilization attitude, and the predetermined period of time. If the current roll attitude of the yaw axis frame 122 is less than (or less than or equal to) the preset roll attitude, the processor 22 may control the roll axis motor 134 to rotate at a second rotation speed, such that the payload 30 can reach and maintain the roll stabilization attitude (e.g., the roll stabilization attitude may be the horizontal direction). The second rotation speed may be obtained based on the difference between the actual roll attitude of the payload 30 and the roll stabilization attitude, and the predetermined period of time. If the current pitch attitude of the roll axis frame 124 is less than (or less than or equal to) the preset pitch attitude, the processor 22 may control the pitch axis frame 126 to rotate based on a third rotation speed, such that the payload 30 can reach and maintain the pitch stabilization attitude (e.g., the pitch stabilization attitude may be the horizontal direction). The third rotation speed may be obtained based on the difference between the actual pitch attitude of the payload 30 and the pitch stabilization attitude, and the predetermined period of time. It should be noted that the stabilization attitude of the yaw axis frame 122, the roll axis frame 124, and the pitch axis frame 126 may not be related to each other. The switching of the yaw axis frame 122, the roll axis frame 124, and the pitch axis frame 126 from the follow mode to the stabilization mode may be performed separately.

Referring to FIG. 2, in some embodiments, the gimbal 10 may further include a display device 18. The display device 18 may be a display screen, etc. After the processor 22 controls the gimbal 10 to rotate based on the current attitude and the current operating mode to switch the gimbal 10 between the stabilization mode and the follow mode, a prompt message may be generated and displayed on the display device 18. In other embodiments, the gimbal 10 may also display the prompt message through a display screen of the payload (such as a camera), which is not limited here.

More specifically, take the yaw axis frame 122 as an example, the processor 22 may control the yaw axis motor 132 to rotate the yaw axis frame 122 to switch the operating mode of the yaw axis frame 122, such as switching the current operating mode of the yaw axis frame 122 from the stabilization mode to the follow mode. A prompt message of the operating mode of the yaw axis frame 122 has been switched to the follow mode may be generated (e.g., yaw: follow mode) and displayed on the display device 18 to remind the user that the operating mode of the yaw axis frame 122 has been switched. A corresponding prompt message may also be generated when switching from the follow mode to the stabilization mode to remind the user. A prompt message may also be generated when the roll axis frame 124 and the pitch axis frame 126 switch the operating mode. The principle is similar to that when the yaw axis frame 122 switches the operating mode, and will not be repeated here. The gimbal 10 can display the current operating mode in real time through the display device 18, and the user experience is better. In other embodiments, the prompt message may be broadcast by voice, or different indicator lights may be used to indicate difference operating modes to remind the user, which is not limited here.

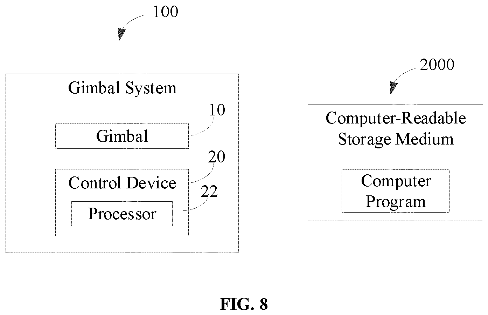

Referring to FIG. 2 and FIG. 8, a computer-readable storage medium 2000 according to an embodiment of the present disclosure includes a computer program used in combination with the gimbal system 100. The computer program may be executed by the processor 22 to complete the control method of any one of the above embodiments.

For example, the computer program may be executed by the processor 22 to complete the control method of the following processes:
012, obtaining a current attitude of the rotating shaft frame 12;
014, obtaining a current operating mode of the gimbal 10;
015, comparing the current attitude with a threshold attitude and obtaining a comparison result of the current attitude and the threshold attitude; and
016, controlling the gimbal to rotate based on the comparison result.

In another example, the computer program may also be executed by the processor 22 to complete the control method of the following processes:
0161, comparing the current attitude with the predetermined attitude; and
0162, controlling the gimbal 10 to rotate to maintain the gimbal 10 in the stabilization mode if the current attitude is less than or equal to the predetermined attitude.

In the present description, descriptions of reference terms such as "an embodiment," "some embodiments," "illustrative embodiment," "example," "specific example," or "some examples," mean that characteristics, structures, materials, or features described in relation to the embodiment or example are included in at least one embodiment or example of the present disclosure. In the present description, illustrative expression of the above terms does not necessarily mean the same embodiment or example. Further, specific characteristics, structures, materials, or features may be combined in one or multiple embodiments or examples in a suitable manner.

Processes or methods described in the flow charts or described in other manners may be understood as including one or more code modules, segments, or portions of executable instructions configured to execute specific logic functions or steps of a process. The scope of the preferred embodiments of the present disclosure may include other executions. Executions may not need follow the illustrated or described sequence or order. The functions may be executed in a substantially simultaneous manner or in a reversed order. These should be understood by a person having ordinary skills in the technical field of the embodiments of the present disclosure.

Logics and/or steps of illustrated in the flowchart or described in other manners may be regarded as a fixed-order sequence list of executable instructions configured to execute the logic functions. The logics and/or steps may be executed in any suitable non-transitory computer-readable medium, and may be used by instruction-execution systems, apparatuses, or devices (e.g., computer-based systems, systems having processors, or other systems that can retrieve instructions from the instruction-execution systems, apparatuses, or devices and execute the instructions), or may be used in combination with the instruction-execution systems, apparatuses, or devices. In the present specification, a "computer-readable medium" may include any device that can include, store, communicate, broadcast, or transfer programs to be used by instruction-execution systems, apparatuses, or devices. Examples of the computer-readable medium may include, but not be limited to, the following: an electrical connector (e.g., an electrical device) having one or multiple wirings, a portable computer disk (e.g., a magnetic device), a random access memory ("RAM"), a read only memory ("ROM"), an erasable programmable read only memory ("EPROM') or a flash memory, an optical device, or a portable compact disc read only memory ("CDROM"). In some embodiments, the computer-readable medium may be paper on which the programs may be printed or other suitable medium, because the paper or other medium may be optically scanned. The scanned copy may be edited, interpreted, or if necessary processed using other suitable method to obtain the programs in an electrical manner. The programs can then be stored in a computer storage device.

A person having ordinary skills in the art can appreciate that various parts of the present disclosure may be implemented using related hardware, computer software, firmware, or a combination thereof. In the above embodiments, multiple steps or methods may be executed by software or firmware stored in the computer-readable storage medium and executable by a suitable instruction-executing system. For example, if the present disclosure is executed by hardware, the hardware may include any of the following technologies known in the art or any combination thereof: a discreet logic circuit of a logic gate circuit configured to perform logic functions for digital signals, an application specific integrated circuit having suitable combinations of logic gate circuits, a programmable gate array ("PGA"), a field programmable gate array ("FPGA"), etc.

A person having ordinary skills in the art can understand that some or all of the steps of the above embodiments of the disclosed method may be implemented by a program instructing relevant hardware. The program may be stored in a computer-readable medium. When executed, the program may include one of the steps or a combination of the steps of the disclosed method.

Various functional units may be integrated in a single processing module, or may exist as separate physical units. In some embodiments, two or more units may be integrated in a single module. The integrated module may be executed by hardware or by software functional modules. If the integrated module is executed by software functional modules and sold or used as an independent product, the integrated module may also be stored in a computer-readable storage medium.

The storage medium mentioned above may be a read only storage device (e.g., memory), a magnetic disk, or an optical disk, etc. Although the above has shown and described the embodiments of the present disclosure, it should be understood that the above embodiments are illustrative, and cannot be understood as limiting the present disclosure. A person having ordinary skills in the art can modify, edit, replace, and vary the embodiments within the scope of the present disclosure.

## Claims

1. A gimbal control method applied to a gimbal system, the gimbal including a rotating shaft frame, comprising:
obtaining a current attitude of the rotating shaft frame;
obtaining a current operating mode of the gimbal;
comparing the current attitude with a threshold attitude and obtaining a comparison result of the current attitude and the threshold attitude; and
controlling the gimbal to rotate based on the comparison result, wherein
the current operating mode of the gimbal includes a stabilization mode and a follow mode; and
controlling the gimbal to rotate based on the comparison result includes one or more of
controlling the gimbal to rotate based on the comparison result to cause the gimbal to maintain the stabilization mode,
controlling the gimbal to rotate based on the comparison result to cause the gimbal to maintain the follow mode, and
controlling the gimbal to rotate based on the comparison result to cause the gimbal to switch between the stabilization mode and the follow mode.

2. The control method of claim 1, wherein when the current operating mode is the stabilization mode and the threshold attitude is a predetermined attitude, controlling the gimbal to rotate based on the comparison result includes:
comparing the current attitude with the predetermined attitude; and
controlling the gimbal to rotate to cause the gimbal to maintain the stabilization mode if the current attitude is greater than or equal to the predetermined attitude.

3. The control method of claim 1, wherein when the current operating mode is the stabilization mode and the threshold attitude is the predetermined attitude, controlling the gimbal to rotate based on the comparison result includes:
comparing the current attitude with the predetermined attitude; and
controlling the gimbal to rotate to cause the gimbal to switch the stabilization mode to the follow mode when the current attitude is greater than or equal to the predetermined attitude.

4. The control method of claim 1, wherein when the current operating mode is the stabilization mode and the threshold attitude is the predetermined attitude, controlling the gimbal to rotate based on the comparison result includes:
comparing the current attitude with the predetermined attitude;
calculating a duration of the current attitude being greater than or equal to the predetermined attitude if the current attitude is greater than or equal to the predetermined attitude; and
controlling the gimbal to rotate to cause the gimbal to switch the stabilization mode to the follow mode if the duration is greater than or equal to a predetermined period of time.

5. The control method of claim 3 or 4, wherein the gimbal system includes a payload, the rotating shaft frame being configured to carry the payload, and controlling the gimbal to rotate based on the comparison result to cause the gimbal to switch the stabilization mode to the follow mode includes:
obtaining a difference between an actual attitude of the payload and the current attitude; and
controlling the gimbal to rotate to cause the payload to maintain the difference to follow the rotation of the rotating shaft frame.

6. The control method of claim 1, wherein when the current operating mode is the follow mode and the threshold attitude is a preset attitude, controlling the gimbal to rotate based on the comparison result includes:
comparing the current attitude with the preset attitude; and
controlling the gimbal to rotate to maintain the gimbal in the follow mode if the current attitude is greater than or equal to the preset attitude.

7. The control method of claim 1, wherein when the current operating mode is the follow mode and the threshold attitude is the preset attitude, controlling the gimbal to rotate based on the comparison result includes:
comparing the current attitude with the preset attitude; and
controlling the gimbal to rotate to cause the gimbal to switch the follow mode to the stabilization mode when the current attitude is less than or equal to the preset attitude.

8. The control method of claim 1, wherein when the current operating mode is the follow mode and the threshold attitude is the preset attitude, controlling the gimbal to rotate based on the comparison result includes:
comparing the current attitude with the preset attitude; and
calculating a duration of the current attitude being less than or equal to the preset attitude; and
controlling the gimbal to rotate to cause the gimbal to switch the follow mode to the stabilization mode when the duration is greater than or equal to a preset period of time.

9. The control method of claim 7 or 8, wherein the gimbal system includes a payload, the rotating shaft frame being configured to carry the payload, and controlling the gimbal to rotate to cause the gimbal to switch the follow mode to the stabilization mode includes:
controlling the gimbal to rotate to cause the payload to reach and maintain a stabilization attitude.

10. The control method of claim 9, wherein controlling the gimbal to rotate to cause the payload to reach and maintain the stabilization attitude includes:
obtaining the actual attitude of the payload and the stabilization attitude;
calculating a rotation speed based on a difference between the actual attitude and the stabilization attitude; and
controlling the gimbal to rotate based on the rotation speed to cause the payload to reach and maintain the stabilization attitude.

11. The control method of claim 9, wherein:
the stabilization attitude is an attitude when the payload is constantly level, a current actual attitude, or an attitude in the stabilization mode before the follow mode.

12. The control method of claim 1, wherein:
the gimbal system includes a payload, the rotating shaft frame being configured to carry the payload;
the stabilization mode includes a relative angle between the payload and a predetermined reference direction remaining unchanged; and
the follow mode includes a relative angle between the payload and the rotating shaft frame remaining unchanged.

13. The control method of claim 1, wherein:
the gimbal system includes a payload;
the gimbal also includes a base and a motor assembly, the rotating shaft frame being disposed on the base to carry the payload;
the motor assembly is used to control the gimbal to rotate;
the rotating shaft frame includes at least one of a yaw axis frame, a roll axis frame, and a pitch axis frame; and
the motor assembly includes at least one of a yaw axis motor, a roll axis motor, and a pitch axis motor.

14. The control method of claim 13, wherein the rotating shaft frame includes the yaw axis frame, the roll axis frame, and the pitch axis frame, the motor assembly includes the yaw axis motor, the roll axis motor, and the pitch axis motor, the current attitude includes a current yaw attitude of the base, a current roll attitude of the yaw axis frame, and a current pitch attitude of the roll axis frame, the predetermined attitude includes a predetermined pitch attitude, a predetermined roll attitude, and a predetermined yaw attitude, and when the current operating mode is the stabilization mode includes:
controlling the yaw axis motor of the gimbal to rotate to cause the yaw attitude of the gimbal to follow the current yaw attitude of the base if the current yaw attitude of the base is greater than the predetermined yaw attitude; and/or
controlling the gimbal to rotate to cause the gimbal to maintain the stabilization mode if the current yaw attitude of the base is less than the predetermined yaw attitude; and/or
controlling the roll axis motor of the gimbal to rotate to cause the roll attitude of the payload to follow the current roll attitude of the yaw axis frame if the current roll attitude of the yaw axis frame is greater than the predetermined roll attitude; and/or
controlling the gimbal to rotate to cause the gimbal to maintain the stabilization mode if the current roll attitude of the yaw axis frame is less than the predetermined roll attitude; and/or
controlling the pitch axis motor of the gimbal to rotate to cause the pitch attitude of the payload to follow the current pitch attitude of the roll axis frame if the current pitch attitude of the roll axis frame is greater than the predetermined pitch attitude; and/or;
controlling the gimbal to rotate to cause the gimbal to maintain the stabilization mode if the current pitch attitude of the roll axis frame is less than the predetermined pitch attitude.

15. The control method of claim 13, wherein the rotating shaft frame includes the yaw axis frame, the roll axis frame, and the pitch axis frame, the motor assembly includes the yaw axis motor, the roll axis motor, and the pitch axis motor, the current attitude includes a current yaw attitude of the base, a current roll attitude of the yaw axis frame, and a current pitch attitude of the roll axis frame, the preset attitude includes a preset pitch attitude, a preset roll attitude, and a preset yaw attitude, and when the current operating mode is the follow mode includes:
controlling the gimbal to rotate based on a first rotation speed to cause the payload to reach and maintain the stabilization attitude if the current yaw attitude of the base is less than the preset yaw attitude; and/or
controlling the gimbal to rotate to cause the yaw attitude of the payload to follow the current yaw attitude of the base if the current yaw attitude of the base is greater than the preset yaw attitude; and/or
controlling the gimbal to rotate based on a second rotation speed to cause the payload to reach and maintain the stabilization attitude if the current roll attitude of the yaw axis frame is less than the preset roll attitude; and/or
controlling the gimbal to rotate to cause the roll attitude of the payload to follow the current roll attitude of the yaw axis frame if the current roll attitude of the yaw axis frame is greater than the preset roll attitude; and/or
controlling the gimbal to rotate based on a third rotation speed to cause the gimbal to reach and maintain the stabilization attitude if the current pitch attitude of the roll axis frame is less than the preset pitch attitude; and/or
controlling the gimbal to rotate to cause the pitch attitude of the payload to follow the current pitch attitude of the roll axis frame if the current pitch attitude of the roll axis frame is greater than the preset pitch attitude.

16. The control method of claim 1, wherein:
the gimbal includes an inertial measurement sensor for obtaining the current attitude of the rotating shaft frame.

17. The control method of claim 1, wherein:
the gimbal further includes a display device; and
after controlling the gimbal to rotate based on the current attitude and the current operating mode to cause the gimbal to switch between the stabilization mode and the follow mode, a prompt message is generated and displayed on the display device.

18. A gimbal control device applied to a gimbal system, the gimbal including a rotating shaft frame, the control device including a processor, the processor being configured to:
obtain a current attitude of the rotating shaft frame;
obtain a current operating mode of the gimbal;
compare the current attitude with a threshold attitude and obtain a comparison result of the current attitude and the threshold attitude; and
control the gimbal to rotate based on the comparison result, wherein
the current operating mode of the gimbal includes a stabilization mode and a follow mode; and
controlling the gimbal to rotate based on the comparison result includes one or more of
controlling the gimbal to rotate based on the comparison result to cause the gimbal to maintain the stabilization mode,
controlling the gimbal to rotate based on the comparison result to cause the gimbal to maintain the follow mode, and
controlling the gimbal to rotate based on the comparison result to cause the gimbal to switch between the stabilization mode and the follow mode.

19. The control device of claim 18, wherein when the current operating mode is the stabilization mode and the threshold attitude is a predetermined attitude, the processor is configured to:
compare the current attitude with the predetermined attitude; and
control the gimbal to rotate to cause the gimbal to maintain the stabilization mode if the current attitude is greater than or equal to the predetermined attitude.

20. The control device of claim 18, wherein when the current operating mode is the stabilization mode and the threshold attitude is the predetermined attitude, the processor is configured to:
compare the current attitude with the predetermined attitude; and
control the gimbal to rotate to cause the gimbal to switch the stabilization mode to the follow mode when the current attitude is greater than or equal to the predetermined attitude.

21. The control device of claim 18, wherein when the current operating mode is the stabilization mode and the threshold attitude is the predetermined attitude, the processor is configured to:
compare the current attitude with the predetermined attitude;
calculate a duration of the current attitude being greater than or equal to the predetermined attitude if the current attitude is greater than or equal to the predetermined attitude; and
control the gimbal to rotate to cause the gimbal to switch the stabilization mode to the follow mode if the duration is greater than or equal to a predetermined period of time.

22. The control device of claim 20 or 21, wherein the gimbal system includes a payload, the rotating shaft frame being configured to carry the payload, and the processor is configured to:
obtain a difference between an actual attitude of the payload and the current attitude; and
control the gimbal to rotate to cause the payload to maintain the difference to follow the rotation of the rotating shaft frame.

23. The control device of claim 18, wherein when the current operating mode is the follow mode and the threshold attitude is a preset attitude, the processor is configured to:
compare the current attitude with the preset attitude; and
control the gimbal to rotate to maintain the gimbal in the follow mode if the current attitude is greater than or equal to the preset attitude.

24. The control device of claim 18, wherein when the current operating mode is the follow mode and the threshold attitude is the preset attitude, the processor is configured to:
compare the current attitude with the preset attitude; and
control the gimbal to rotate to cause the gimbal to switch the follow mode to the stabilization mode when the current attitude is less than or equal to the preset attitude.

25. The control device of claim 1, wherein when the current operating mode is the follow mode and the threshold attitude is the preset attitude, the processor is configured to:
compare the current attitude with the preset attitude; and
calculate a duration of the current attitude being less than or equal to the preset attitude; and
control the gimbal to rotate to cause the gimbal to switch the follow mode to the stabilization mode when the duration is greater than or equal to a preset period of time.

26. The control device of claim 24 or 25, wherein the gimbal system includes a payload, the rotating shaft frame being configured to carry the payload, and the processor is configured to:
control the gimbal to rotate to cause the payload to reach and maintain a stabilization attitude.

27. The control device of claim 26, wherein the processor is configured to:
obtain the actual attitude of the payload and the stabilization attitude;
calculate a rotation speed based on a difference between the actual attitude and the stabilization attitude; and
control the gimbal to rotate based on the rotation speed to cause the payload to reach and maintain the stabilization attitude.

28. The control device of claim 26, wherein:
the stabilization attitude is an attitude when the payload is constantly level, a current actual attitude, or an attitude in the stabilization mode before the follow mode.

29. The control device of claim 18, wherein:
the gimbal system includes a payload, the rotating shaft frame being configured to carry the payload;
the stabilization mode includes a relative angle between the payload and a predetermined reference direction remaining unchanged; and
the follow mode includes a relative angle between the payload and the rotating shaft frame remaining unchanged.

30. The control device of claim 18, wherein:
the gimbal system includes a payload;
the gimbal also includes a base and a motor assembly, the rotating shaft frame being disposed on the base to carry the payload;
the motor assembly is used to control the gimbal to rotate;
the rotating shaft frame includes at least one or a yaw axis frame, a roll axis frame, and a pitch axis frame; and
the motor assembly includes at least one of a yaw axis motor, a roll axis motor, and a pitch axis motor.

31. The control device of claim 30, wherein the rotating shaft frame includes the yaw axis frame, the roll axis frame, and the pitch axis frame, the motor assembly includes the yaw axis motor, the roll axis motor, and the pitch axis motor, the current attitude includes a current yaw attitude of the base, a current roll attitude of the yaw axis frame, and a current pitch attitude of the roll axis frame, the predetermined attitude includes a predetermined pitch attitude, a predetermined roll attitude, and a predetermined yaw attitude, and when the current operating mode is the stabilization mode, the processor is configured to:
control the yaw axis motor of the gimbal to rotate to cause the yaw attitude of the gimbal to follow the current yaw attitude of the base if the current yaw attitude of the base is greater than the predetermined yaw attitude; and/or
control the gimbal to rotate to cause the gimbal to maintain the stabilization mode if the current yaw attitude of the base is less than the predetermined yaw attitude; and/or
control the roll axis motor of the gimbal to rotate to cause the roll attitude of the payload to follow the current roll attitude of the yaw axis frame if the current roll attitude of the yaw axis frame is greater than the predetermined roll attitude; and/or
control the gimbal to rotate to cause the gimbal to maintain the stabilization mode if the current roll attitude of the yaw axis frame is less than the predetermined roll attitude; and/or
control the pitch axis motor of the gimbal to rotate to cause the pitch attitude of the payload to follow the current pitch attitude of the roll axis frame if the current pitch attitude of the roll axis frame is greater than the predetermined pitch attitude; and/or;
controlling the gimbal to rotate to cause the gimbal to maintain the stabilization mode if the current pitch attitude of the roll axis frame is less than the predetermined pitch attitude.

32. The control device of claim 30, wherein the rotating shaft frame includes the yaw axis frame, the roll axis frame, and the pitch axis frame, the motor assembly includes the yaw axis motor, the roll axis motor, and the pitch axis motor, the current attitude includes a current yaw attitude of the base, a current roll attitude of the yaw axis frame, and a current pitch attitude of the roll axis frame, the preset attitude includes a preset pitch attitude, a preset roll attitude, and a preset yaw attitude, and when the current operating mode is the stabilization mode, the processor is configured to:
control the gimbal to rotate based on a first rotation speed to cause the payload to reach and maintain the stabilization attitude if the current yaw attitude of the base is less than the preset yaw attitude; and/or
control the gimbal to rotate to cause the yaw attitude of the payload to follow the current yaw attitude of the base if the current yaw attitude of the base is greater than the preset yaw attitude; and/or
control the gimbal to rotate based on a second rotation speed to cause the payload to reach and maintain the stabilization attitude if the current roll attitude of the yaw axis frame is less than the preset roll attitude; and/or
control the gimbal to rotate to cause the roll attitude of the payload to follow the current roll attitude of the yaw axis frame if the current roll attitude of the yaw axis frame is greater than the preset roll attitude; and/or
control the gimbal to rotate based on a third rotation speed to cause the gimbal to reach and maintain the stabilization attitude if the current pitch attitude of the roll axis frame is less than the preset pitch attitude; and/or
control the gimbal to rotate to cause the pitch attitude of the payload to follow the current pitch attitude of the roll axis frame if the current pitch attitude of the roll axis frame is greater than the preset pitch attitude.

33. The control device of claim 18, wherein:
the gimbal includes an inertial measurement sensor for obtaining the current attitude of the rotating shaft frame.

34. The control device of claim 18, wherein:
the gimbal further includes a display device; and
after controlling the gimbal to rotate based on the current attitude and the current operating mode to cause the gimbal to switch between the stabilization mode and the follow mode, a prompt message is generated and displayed on the display device.

35. A gimbal system comprising:
a gimbal; and
the control device according to any one of claims 18 to 34, the control device being disposed on the gimbal.

36. The gimbal system of claim 35, wherein:
the gimbal system further includes a payload disposed on the gimbal.

37. A UAV comprising:
a body; and
the gimbal system of claim 35 or 36, the gimbal system being disposed on the body.
